# EUROPEAN PATENT APPLICATION

(11) **EP 1 726 530 A1**
(43) Date of publication of application: **29.11.2006**
(21) Application number: 06009860.5
(22) Date of filing: 12.05.2006
(51) Int. Cl.: B65D 30/06

(54) **Bag comprising a plastic mesh and a printed film sealed thereon**

(30) Priority: 27.05.2005 ES 200501281
(71) Applicant: Nordenia Iberica Barcelona, 08213 Polinya (ES)
(72) Inventor: Luis Santini, Miguel Angel, Barcelona (ES)
(74) Representative: Albrecht, Rainer Harald

(57) **Abstract**

The invention relates to a bag (1) comprising a plastic mesh (2) and a printed film (3) sealed thereon. The printed film (3) is extruded as a multi-layer film and has a sealable layer on one side. A varnish (5) is applied to the opposite printed side.

## Description

The invention relates to a bag comprising a plastic mesh and a printed film sealed thereon.

Such a bag which is used for example as sales packaging for fruit, vegetables or the like is described in the document ES 2 112 091 A1. A strip of film, for example, of polyethylene, is sealed onto the bag-shaped plastic mesh comprising an extruded thermoplastic. The film strip which is joined to the plastic mesh continuously or at individual points along the lower edge of the plastic mesh and in the vertical direction, provides the possibility for inscription or advertising on the bag, wherein on the one hand sealable polyethylene (PE) films are difficult to print and on the other hand, the printing applied directly to the surface is not protected against abrasion.

Laminated films are further known for bag packaging which have an outer film layer of polyethylene terephthalate (PET) or oriented polypropylene (PP-O), wherein the outer film layer can be printed using face printing. A sealable PE film is laminated on the printed side of the outer film layer. Since the printing is arranged between the film layers, it is protected against abrasion. The laminated films typically have a shiny surface because of the PET or PP-O materials used. If a matt surface is desired for the film, the outer film layer can be made of matt PET which is comparatively expensive however.

It is the object of the invention to provide a mesh bag with a printed film sealed thereon which can be manufactured inexpensively and in few working steps, wherein the printing on the film should be resistant to abrasion. The bag must especially be suitable as sales packaging for fruit and vegetables.

The object is solved according to the invention by the printed film being co-extruded as a multi-layer film, said film having a sealable layer on one side and being printed on the opposite side and by a varnish being applied to the printed side.

The varnish forms a resistant structure which protects the printing from abrasion and improves the thermal resistance of the outer layer. This contributes towards the fact that the film can be sealed onto the plastic mesh without any problems. The varnish which is applied to the outer layer over the total area or merely in sections on the printed areas can be adjusted as matt or gloss. Suitable are for example two-component varnish or varnish which is fixed by high-energetic radiation like UV-radiation or electron beam radiation.

In a preferred embodiment the film consists of a printed outer layer, a core layer and a sealing layer, where the individual layers can also consist of a plurality of film layers. In a particularly preferred embodiment of the invention, the film consists of three co-extruded film layers which form the outer layer, the core layer and the sealing layer.

The outer layer which is distinguished by good printability preferably consists mainly of polypropylene, including the polypropylene homopolymers (PP-H), polypropylene random copolymers (PP-RC), polypropylene block copolymers (PP-BC) and the types of polypropylene obtained using a metallocene catalyst or a mixture of these polymers. Furthermore, an outer layer consisting mainly of high-density polyethylene (PE-HD) is also suitable.

The core layer preferably consists of polypropylene, including the polypropylene homopolymers (PP-H), polypropylene random copolymers (PP-RC), polypropylene block copolymers (PP-BC), polyethylene, polyethylene copolymers and the types of these polymers obtained using a metallocene catalyst or a mixture of these polymers.

The sealing layer preferably consists mainly pf polyethylene, for example, low-density polyethylene (PE-LD, PE-LLD, PE-VLD) including the types PE-LLDm and PE-VLDm obtained using a metallocene catalyst, polyethylene copolymer or a mixture of these polymers.

In addition to said polyolefins, the layers of co-extruded film preferably only contain up to a maximum of 30 wt.% of fillers in each case and/or small quantities of functional additives as the remainder. The layers of film can, for example, contain talc or chalk as filler. The use of fillers makes it possible to reduce manufacturing costs and to change the mechanical properties of the co-extruded film. Furthermore, the layers of the co-extruded film can contain functional additives, for example, lubricating agent, anti-blocking particles, thermostabilisers, dye pigments and processing aids.

As a result, the co-extruded film can have a high polypropylene content of more than 40 wt.%, preferably more than 70 wt.%.

The core layer, which has good adhesion to the sealing layer and the outer layer as a result if its material composition, typically contributes decisively to the strength and stiffness of the co-extruded film. The thickness of the core layer d₂ is preferably in a range of 1/3 to ¾ and particularly preferably in a range of 1/3 to 3/5 of the total thickness dₜₒₜ of the multi-layer co-extruded film. If the thickness of the outer layer d₁ and the thickness of the sealing layer d₃ are the same, the ratio d₁:d₂:d₃ is accordingly in a range of 1:1:1 to 1:6:1, preferably in a range of 1:1:1 to 1:3:1. The thicknesses d₁ and d₃ can be different. Ratios of 1:4:2 or 2:4:1 are also within the scope of the invention for example. The total thickness dₜₒₜ of the multi-layer co-extruded film is typically in a range between 40 µm and 130 µm, preferably between 60 µm and 80 µm.

A co-extruded film whose core layer is formed by interlocking a tubular film extruded through a ring nozzle and whose sealing and outer layer have the same structure and are both printable and sealable also comes within the invention. Such a co-extruded film is laid flat after extrusion whereupon the interior layers interlock and form the core layer. The interlocked film has twice the strength of the extruded film and is distinguished by a high stiffness.

The multi-layer co-extruded printed film is sealed onto the plastic mesh as continuous strips in the vertical direction or in sections. A plurality of strips and/or sections can be sealed on a plastic mesh. The bag according to the invention can be fitted with a carrying handle wherein this can be formed either by a stamping in the printed film or by separate film strips.

When separate film strips are used, the ends of these strips are typically arranged between the printed film and the plastic mesh and sealed in this area.

The invention is explained subsequently with reference to drawings which show merely one exemplary embodiment. In the figures:
- **Fig. 1**: is a schematic diagram showing a bag comprising a plastic mesh and a printed film sealed thereon and
- **Fig. 2**: shows the structure of a multi-layer co-extruded printed film.

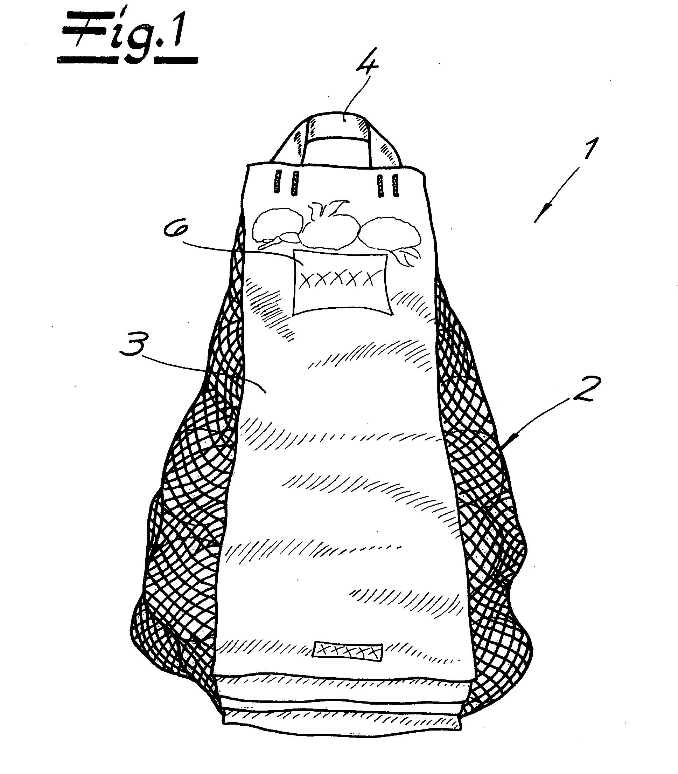

Figure 1 shows a bag 1 comprising a plastic mesh 2 and a printed film 3 sealed thereon. The printed film 3 is sealed as strips over the total vertical extension of the plastic mesh 2. A handle 4 comprising a strip of film is arranged at the upper end of the film 3, the ends of said handle being sealed tightly onto the bag 1 between the printed film 3 and the plastic mesh 2. The film 3 is printed for advertising and information purposes, the varnish 5 applied to the film 3 preventing abrasion of the printing. The film 3 is coloured by adding dye pigments.

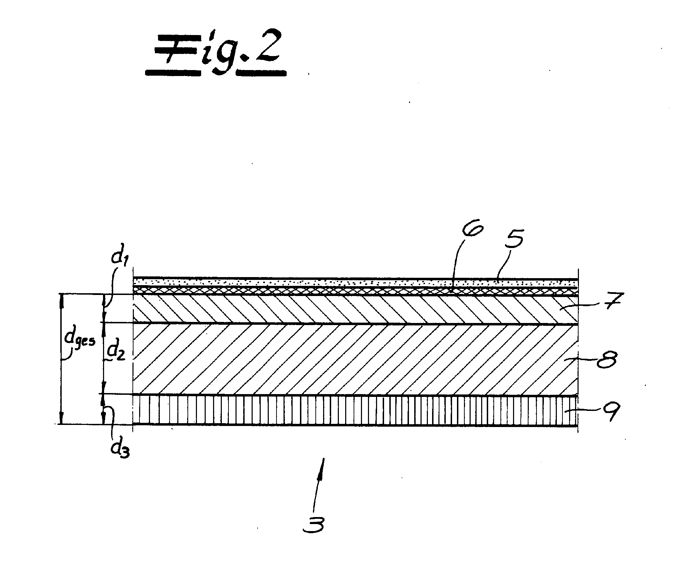

Figure 2 shows the structure of the multi-layer co-extruded film 3. The printed film 3 consists of three co-extruded film layers which form an outer layer 7, a core layer 8 and a sealing layer 9. An imprint 6 which is protected from abrasion by a resistant film of varnish 5, is applied to the outer layer 7 which preferably consists mainly of polypropylene, including the polypropylene copolymers and the types of polypropylene obtained using a metallocene catalyst or a mixture of these polymers.

The core layer 8 which has a thickness d₂ in a range of 1/3 to ¾ and preferably in a range of 1/3 to 3/5 of the total thickness dₜₒₜ of the multi-layer co-extruded film 3 consists mainly of polypropylene, including the polypropylene copolymers, polyethylene, including the polyethylene copolymers as well as the types of these polymers obtained using a metallocene catalyst or a mixture of these polymers. Chalk or talc can be used as filler especially in the core layer 8 which in this exemplary embodiment has a greater thickness than the sealing layer 9 and the outer layer 7, which substantially reduces the manufacturing costs.

The sealing layer 9 is distinguished by a good sealability and consists mainly of polyethylene, including the polyethylene copolymers and the types of polymers obtained using a metallocene catalyst or a mixture of these polymers.

The total thickness dₜₒₜ of the multi-layer co-extruded film 3 lies between 40 µm and 120 µm, preferably between 60 µm and 80 µm. As is usual in film processing, the layers of the co-extruded film 3 can contain lubricating agent, anti-blocking particles, thermostabilisers, dye pigments and/or processing aids.

As an alternative to the preferred embodiments where the outer layer 7 consists of polypropylene, the core layer 8 consists of a polypropylene/polyethylene mixture and the sealing layer 9 consists of polyethylene, the sealing layer 9 and the outer layer 7 can have the same structure and can be both printable and sealable. In this embodiment the core layer 8 can be formed by interlocking a tubular film extruded through a ring nozzle.

Various co-extruded films 3 according to the invention having a structure corresponding to that in Fig. 2 are shown in Table 1. In addition to the total thickness of the film 3 dₜₒₜ, the thickness of the outer layer 7 d₁, the core layer 8 d₂, the sealing layer 9 d₃ and the polymers used for the outer layer P₁, the core layer P₂ and the sealing layer P₃ are also given. The polymers are given with the parameters, density [g/cm³] and melt flow index (melt flow_{MFI}). The melt flow index (MFI) is given for polypropylene at 230° C/2.16 kg and for polyethylene at 190° C/2.16 kg.

**Table 1**

| Example | dₜₒₜ | d₁ | d₂ | d₃ | P₁ | P₂ | P₃ |
|---|---|---|---|---|---|---|---|
| 1 | 70 µm | 16 µm | 42 µm | 12 µm | 100% PP-RC | 68% PP-BC (0.90 g/cm³; MFI 0.8)/ | 60% PE-VLDₘ (0.90 g/cm³; MFI 1.0) |
| | | | | | (0.90 g/cm³; MFI 2.2) | 32% PP-RC (0.89 g/cm³; MFI 0.6) | 40% PE-LLDₘ (0.92 g/cm³; MFI 1.0) |
| 2 | 70 µm | 16 µm | 42 µm | 12 µm | 100% PP-RC | 58% PP-BC (0.90 g/cm³; MFI 0.8)/ | 60% PE-VLDₘ (0.90 g/cm³; MFI 1.0) |
| | | | | | (0.90 g/cm³; MFI 2.2) | 21% PP-RC (0.89 g/cm³; 0.6)/ | 40% PE-LLDₘ (0.92 g/cm³; MFI 1.0) |
| | | | | | | 21% PE-LD (0.93 g/cm³; MFI 0.9) | 40% PE-LLDₘ (0.92 g/cm³; MFI 1.0) |
| 3 | 70 µm | 16 µm | 42 µm | 12 µm | 100% PP-RC | 68% PP-H (0.90 g/cm³; MFI 0.7)/ | 60% PE-VLDₘ (0.90 g/cm³; MFI 1.0) |
| | | | | | (0.90 g/cm³; MFI 2.2) | 21% PP-RC (0.89 g/cm³; MFI 0.6) | 40% PE-LLDₘ (0.92 g/cm³; MFI 1.0) |
| 4 | 70 µm | 16 µm | 42 µm | 12 µm | 100% PP-RC (0.90 g/cm³; MFI 2.2) | 58% PP-BC (0.90 g/cm³; MFI 0.7)/ | 60% PE-VLDₘ (0.90 g/cm³; MFI 1.0) |
| | | | | | (0.90 g/cm³; MFI 2.2) | 21% PP-RC (0.89 g/cm³; 0.6)/ | 40% PE-LLDₘ (0.92 g/cm³; MFI 1.0) |
| | | | | | | 21% PE-LD (0.93 g/cm³; MFI 0.9) | |
| 5 | 70 µm | 16 µm | 41 µm | 13 µm | 85% PP-RC | 50% PP-H (0.90 g/cm³; MFI 0.7)/ | 75% PE-LLD (0.92 g/cm³; MFI 1.1) |
| | | | | | (0.90 g/cm³; MFI 2.2) | 30% PE-LLDₘ (0.92 g/cm³; MFI 1.0)/ | |
| | | | | | 15 % PP-H | 20% PP-RC (0.89 g/cm³; MFI 0.6) | 25 % PE-MD (0.94 g/cm³; MFI 1.0) |
| | | | | | (0.90 g/ cm³; MFI 2.0) | | |

## Claims

1. A bag (1) comprising a plastic mesh (2) and a printed film (3) sealed thereon, **characterised in that** the printed film (3) is co-extruded as a multi-layer film, having a sealable layer on one side and printed on the opposing side and that a varnish (5) is applied to the printed side.

2. The bag according to claim 1, **characterised in that** the film (3) consists of a printable outer layer (7), a core layer (8) and a sealing layer (9).

3. The bag according to claim 2, **characterised in** the film consists of three co-extruded film layers which form the outer layer (7), the core layer (8) and the sealing layer (9).

4. The bag according to claim 2 or 3, **characterised in that** the printable outer layer (7) mainly consists of polypropylene, including the polypropylene copolymers and the types of polypropylene obtained using a metallocene catalyst or a mixture of these polymers.

5. The bag according to any one claims 2 to 4, **characterised in that** the printable outer layer (7) mainly consists of high-density polyethylene (PE-HD).

6. The bag according to any one claims 2 to 5, **characterised in that** the core layer (8) mainly consists of polypropylene, including the polypropylene copolymers, polyethylene, including the polyethylene copolymers, as well as types of these polymers obtained using a metallocene catalyst, or a mixture of these polymers.

7. The bag according to any one claims 2 to 6, **characterised in that** the sealing layer (9) mainly consists of polyethylene, including the polyethylene copolymers, as well as the types of polyethylene obtained using a metallocene catalyst or a mixture of these polymers.

8. The bag according to any one claims 2 to 7, **characterised in that** the thickness of the core layer (8) lies in a range of 1/3 to ¾ and preferably in a range of 1/3 to 3/5 of the total thickness of the multi-layer co-extruded film (3).

9. The bag according to any one claims 1 to 8, **characterised in that** the total thickness of the multi-layer co-extruded film (3) lies between 40 µm and 120 µm.

10. The bag according to any one claims 1 to 9, **characterised in that** the total thickness of the multi-layer co-extruded film (3) lies between 60 µm and 80 µm.

11. The bag according to any one claims 1 to 10, **characterised in that** the layers of the co-extruded film (3) contain lubricating agent, anti-blocking particles, thermostabilisers, dye pigments and/or processing aids.

12. The bag according to any one claims 1 to 11, **characterised in that** the layers of the film (3) each contain a maximum of 30 wt.% of talc or chalk as filler.

13. The bag according to any one claims 1 to 12, **characterised in that** the core layer (8) is formed by interlocking a tubular film extruded through a ring nozzle and that the sealing layer (9) and the outer layer (7) have the same structure and can be both printed and sealed.
